# EUROPEAN PATENT APPLICATION

(11) **EP 1 054 171 A2**
(43) Date of publication of application: **22.11.2000**
(21) Application number: 00108774.1
(22) Date of filing: 25.04.2000
(51) Int. Cl.: F16B 37/08

(54) **A threaded fixing device**

(30) Priority: 22.04.1999 JP 11429999
(71) Applicant: Oki, Hideaki, Yokohama (JP)
(72) Inventor: Shimodaira, Kurachi, Setagaya-ku, Tokyo (JP); Oki, Hideaki, Midori-ku, Yokohama (JP)
(74) Representative: Bryer, Kenneth Robert

(57) **Abstract**

A fixing device (10) for threaded engagement on an elongate member (50) having an external screw thread, comprising a body with an opening (11) having an internal screw thread (13) engageable by the said external screw thread of the elongate member (50) when inserted therein, in which the said internal screw thread (13) extends over a part of the opening (11) less than the entire circumference thereof, and the opening (11) is so shaped that a threaded elongate member (50) can be introduced into it without engaging the said internal screw thread (13), the body having means (14, 15; 35) for resisting lateral displacement of a threaded elongate member (50) positioned within the said opening (11) whereby to retain the internal screw threaded part (13; 36) of the opening (11) in engagement with the external screw thread of the said elongate member.

## Description

The present invention relates generally to a threaded fixing device, and particularly to a nut for threaded engagement on an elongate threaded member such as a bolt or a stud.

When a bolt is inserted through a member and tightened with a conventional nut, which fits threaded on to the bolt, the nut fitted to the end of the bolt must be screwed along the bolt from its end to the appropriate fixing position where it is tightened. This requires time and effort and is a limiting factor in work efficiency.

It is known for a conventional fixing structure for a bolt or other threaded shaft optionally to include a separate guide washer that restricts the perimeter of the nut and the bolt at the same time. However, such an arrangement has the potential to lead to unreliability in fixing the bolt.

The inventor of the present invention has improved upon the conventional method and has proposed a threaded fixing device to facilitate the fixing of a threaded elongate member such as a bolt or stud or threaded shaft.

The present invention seeks to provide a fixing device for an elongate threaded member which overcomes the foregoing problems.

More specifically, the present invention addresses the problem of providing a fixing which reliably and efficiently fixes an elongate threaded member such as a bolt to a given member.

According to the present invention there is provided a fixing device for threaded engagement on an elongate member having an external screw thread, comprising a body with an opening having an internal screw thread engageable by the said external screw thread of the elongate member when inserted therein, characterised in that the said internal screw thread extends over a part of the opening less than the entire circumference thereof, and the opening is so shaped that a threaded elongate member can be introduced into it without engaging the said internal screw thread, the body having means for resisting lateral displacement of a threaded elongate member positioned within the said opening whereby to retain the internal screw threaded part of the opening in engagement with the external screw thread of the said elongate member.

In one embodiment of the invention the said means for resisting lateral displacement of a threaded elongate member in the said opening comprise a radially outwardly facing shoulder on one face of the body and a radially inwardly facing shoulder on the opposite face of the body, corresponding shoulders of two like such fixing devices being capable of cooperating, when the bodies are positioned adjacent one another with opposite faces in contact, to resist relative lateral movement of one body with respect to the other such that upon relative turning of the bodies about the axis of a threaded elongate member the two partial internal threaded parts of the individual fixing devices, each extending over less than the entire circumference of the opening, can together extend over more than half of the circumference whereby to resist lateral displacement of the two fixing devices with respect to the said threaded elongate member.

Such an embodiment may be formed as a nut with an opening in the body formed as a closed figure. Such figures may, for example, be contiguous large and small arcs of respective circles. The inner wall of the larger arc can slide against the outer perimeter of a threaded elongate member such as a bolt. The inner wall of the smaller arc is formed as a threaded surface that engages with the threaded elongate member.

Alternatively, the opening in the body may be a laterally open slot.

In either embodiment it is preferred that the said radially outwardly facing shoulder is defined by a central raised boss on one face of the body and the said radially inwardly facing shoulder is defined by a central cavity in the opposite face of the said body.

Likewise, it is preferred that the said hole has a plain surface part against which a threaded elongate member can slide as the nut is positioned axially therealong.

In use a pair of these nuts is mounted to the bolt with the central raised boss of one engaged in the cavity of the other. When turned so that the partial internal threaded portions are in register the two nuts can be slid axially along the bolt with its threaded shank passing through the hole in the nut but disengaged from the partial threaded portions thereof. When at or adjacent the desired position one nut is turned with respect to the other so that the two partial threaded portions are no longer in register. The two nuts, working together as a fixing device, can then be screwed up to tighten the fixing in the usual way.

In an alternative embodiment the said means for resisting lateral displacement of a threaded elongate member in the said opening comprise a part of the side wall of the opening opposite the said partial internal threaded part of the opening engageable by the said elongate threaded member.

This engageable part is preferably near the lowermost end of the bolt insertion opening. When the bolt abuts the engageable part it receives a force in the horizontal direction and presses against the partial internal threaded surface of the hole in the body. With the above structure, the bolt is fixed in a very reliable manner, and work efficiency is improved while expense is reduced.

Expressed anther way, the present invention may be seen as a bolt fixing structure comprising: a bolt passed through a member; a nut fitting on an end of the bolt; a bolt insertion opening of the nut having a large semicircular section and a small semicircular section contiguous with each other; an inner wall of the large semicircular section being a flat surface against which an outer perimeter of the bolt can slide; an inner wall of the small semicircular section being a threaded surface engageable with projecting threads of the bolt; a wall projecting at a perimeter edge of the bolt insertion opening of the nut; a disc-shaped cavity on a bottom surface of the nut, fitting against the wall, maintaining an engaged state between the bolt and the small semicircular section of the bolt insertion opening of the nut by surrounding and restricting the bolt; and at least first and second of the nuts are mounted in a stacked manner on the bolt, whereby tightening the at least first and second of the nuts in opposite directions fixes the nut on the bolt.

The present invention also comprehends a bolt fixing structure comprising: a bolt passing though a member; a nut fitting from an end of the bolt; a bolt insertion opening of the nut including a semicircular section having an inner wall formed as a threaded surface engaging with projecting threads of an outer perimeter of the bolt; a rectangular section, continuous with the semicircular section; having opposing inner walls allowing the bolt to slide; the bolt insertion opening having an inwardly extending arcuate shape wherein an end of the rectangular section opens towards the outside of the nut, allowing the nut to be directly mounted to the bolt from a side surface thereof; and at least first and second of the nuts being brought close to each other and mounted to the bolt, whereby tightening the last least first and second of the nuts in opposite directions fixes the nut on the bolt.

The present invention may also be considered to extend to a bolt fixing structure, comprising : a bolt being passed through an upper member and inserted into a lower member; a nut, including a bolt insertion opening formed from a continuous large semicircular section and a small semicircular section being one of embedded in and molded beforehand in at least one of the upper members and the lower member; an inner wall of the large semicircular section of the bolt insertion opening allowing sliding of an outer perimeter of the bolt, an inner wall of the small semicircular section having a threaded surface against which projected threads of the outer perimeter of the bolt engage; a raised section on a wall surface of the large semicircular section near the lowermost end of the bolt insertion opening; the bolt engaging with the small semicircular section of the nut; and the raised section abutting an end corner of the bolt, pressing the bolt in a horizontal direction, thereby maintaining an engaged state between the bolt and the threaded surface.

An elongate threaded member such as a bolt, passed through a member, can thus be fixed by tightening a nut slid in from an end of the bolt. An inner wall of a part of the hole is formed as a plain (that is unthreaded) surface against which an outer perimeter of a bolt can slide. A part of the inner wall of the hole is formed as a threaded surface against which projecting threads of the bolt can engage when pressed against them. An annular shoulder around the bolt insertion opening of the nut, and a circular cavity, formed on an opposite face of the nut allowing two nuts to be fitted together serve to maintain an engaged state between the bolt and the partial threaded section of the bolt insertion opening (or hole) of the nut by surrounding and restricting the bolt. A pair of the nuts are mounted in a stacked manner on the bolt, and the nuts are subsequently turned with respect of one another to bring them to an engagement position.

It is preferable to form a cavity or a projection on the bottom surface of the nut, and a complementary boss or projection on the upper surface of the nut. This structure provides a tight fit between the nuts.

In the alternative embodiment a partially threaded opening may be formed on one or two members to be fixed together by a bolt or stud, or a partially threaded nut may be fixed to or embedded on one of the members. Such a fixing involves the presence of a projecting surface extending from the smooth or plain part of the opening acting as a ramp to deflect the end of the bolt laterally as it is introduced, thereby engaging it against the partial internal thread of the opening for tightening

Various embodiments of the present invention will now be more particularly described, by way of example, with reference the accompanying drawings, in which like reference numerals designate the same elements, and in which:
Figure 1a is a plan view of a nut formed as a first embodiment of the present invention;
Figure 1b is a vertical cross-section drawing of the nut in Figure 1a;
Figure 1c is a perspective drawing, as seen from above, of the nut of Figure 1a;
Figure 1d is a perspective drawing, as seen from below, of the nut of Figure 1a;
Figure 2a is a perspective drawing of a pair of nuts separated by a distance;
Figure 2b is vertical cross-section drawing after loose mounting of the pair of nuts in Figure 2a to a bolt;
Figure 3a is a perspective drawing of a pair of nuts in close proximity;
Figure 3b is a vertical cross-section drawing of Figure 3a with an upper nut completely tightened;
Figure 4a is a plan drawing of a nut according to a second embodiment of the present invention;
Figure 4b is a vertical cross-section drawing of the nut of Figure 4a;
Figure 5a is a vertical cross-section drawing of the pair of nuts of Figure 5a after tightening is completed;
Figure 6a is a plan view of a bolt fixing structure according to a third embodiment of the present invention;
Figure 6b is a cross-section drawing along the S-S line of Figure 6a; and
Figure 6c is a cross-section drawing along the Y-Y line of Figure 6b;

Referring to the drawings, the following is a description of a first embodiment of the present invention.

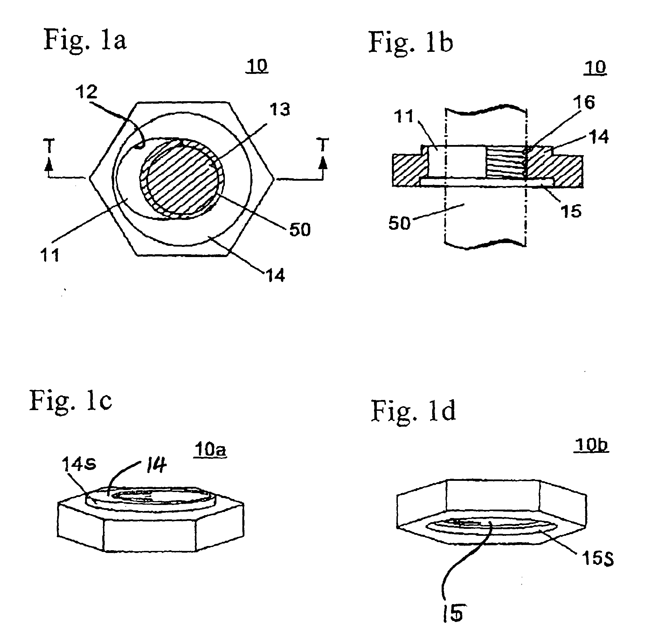

Figure 1a is a plan drawing of nut 10 according to the present invention. Figure 1b is a cross-section along the T-T line in Figure 1a.

Referring to Figures 1a to 1d, a bolt insertion opening or hole 11 of nut 10 includes a large part-circular portion 12 and a small part-circular portion 13. The inner wall of large part-circular portion 12 is formed as a plain or smooth surface against which the outer perimeter of a bolt 50 can slide. The inner wall of small part-circular portion 13 is formed as a threaded surface 16 engageable with the projecting threads of bolt 50.

An annular boss or projection 14, on the upper surface of the nut defines a radially outwardly facing shoulder 14s surrounding bolt insertion opening 11. A circular cavity 15 on the bottom surface of nut 10 defines a radially inwardly facing shoulder 15s and allows projection 14, on the upper surface of an adjacent nut (not shown) to be closely fitted against nut 10.

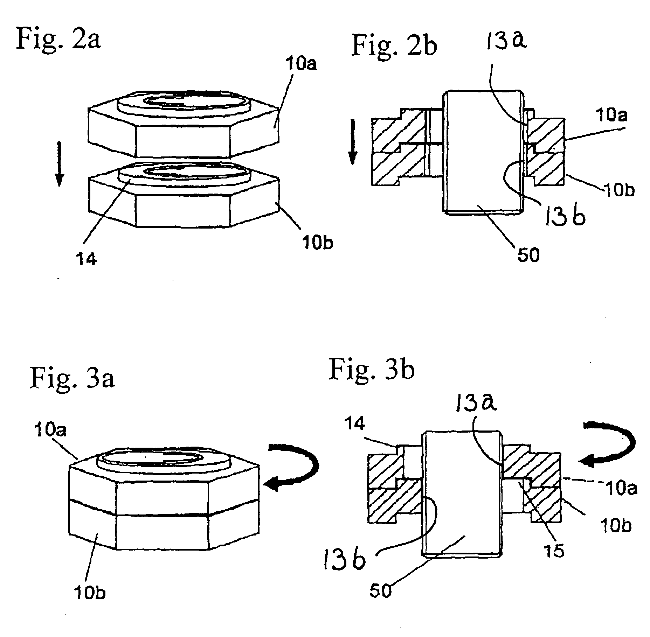

Referring to Figures 2a and 2b, nuts 10a and 10b are of the same shape as those described in Figures 1a to 1d above. Nuts 10a and 10b are mounted, one after the other, on top of each other, to bolt 50, which is inserted through a member. A loose engagement is formed between the large part-circular portion 12 and bolt 50.

Referring to Figures 3a and 3b, upper nut 10a is shown turned through 180° so that the two small diameter partially threaded portions 13 are opposed to each other and engage the threads on the bolt 50. The cavity 15 on the bottom surface of upper nut 10a fits over the annular projection 14 on the upper surface of lower nut 10a, so that the two nuts are located coaxially to provide a firm tightening of the bolt when both are turned together maintaining the same relative orientation as shown in Figure 3.

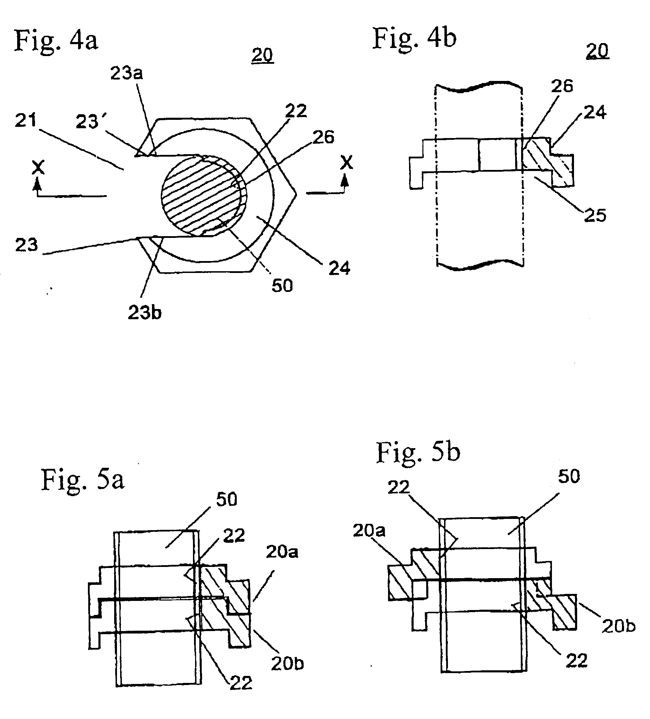

Referring to Figures 4a and 4b the following is a description of a second embodiment of the present invention. A nut 20 is preferably formed as a roughly equilateral hexagon with an open-ended slot as the bolt insertion opening 21. Within bolt insertion opening 21, a semicircular section 22 meets tangentially two plain walls 23a, 23b of the slot 21. The inner wall of semicircular section 22 is formed with a threaded surface 26 that engages with the projecting threads on the outer perimeter of bolt 50. Facing inner walls 23a and 23b of open slot section 23 are formed as a plain or smooth surfaces against which the bolt slides.

Thus, nut 20 can be mounted directly, through an open end 23 of the slot 21 at an appropriate position laterally of the bolt 50.

A part-circular projection 24 is disposed on the upper surface of nut 20, surrounding bolt insertion opening 21. A corresponding part-circular cavity 25, into which part-annular projection 24 is fitted, is on the bottom surface of nut 20.

Referring now to Figures 5a and 5b, the pair of nuts 20a and 20b are mounted one above the other in contact with each other, on bolt 50, by moving them laterally to allow them both to enter through the open end 23. Their respective semicircular sections 22 are loosely engaged with bolt 50. Upper nut 20a is then rotated with respect to the lower nut so that the slots 21 of the two nuts are facing in opposite directions from one another. As a result, semi-circular sections 22 engage with bolt 50 from either side. Therefore, the entire bolt 50 is fixed to the member via nuts 20a and 20b, thus fixing the bolt firmly. Further tightening can be achieved by turning both nuts together while maintaining their relative orientation.

Part-annular cavity 25, on the bottom surface of upper nut 20a, fits over the part-annular projection 24 on the upper surface of lower nut 20b. This results in the two nuts being held together by this and their engagement on the bolt 50 and allows the bolt to be tightened firmly.

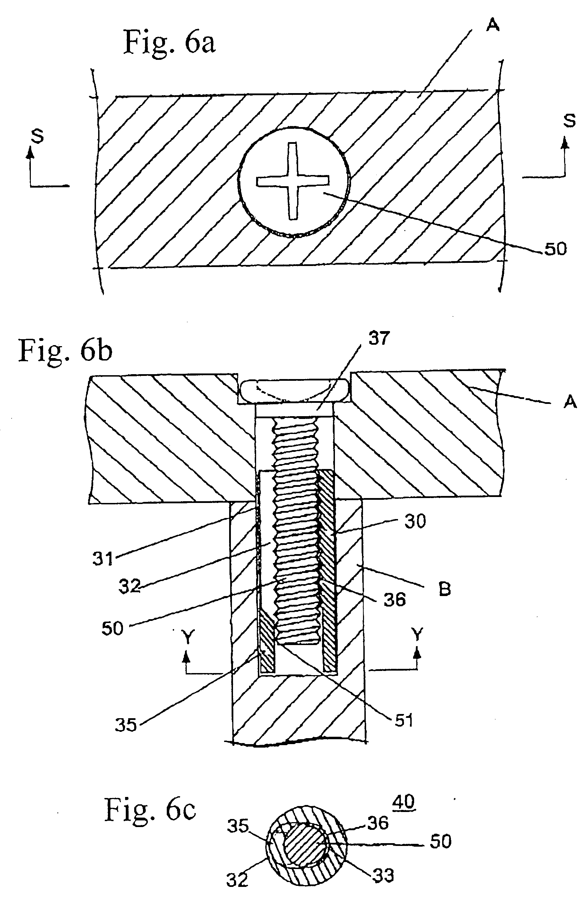

Referring to Figures 6a to 6c, there is shown a side-view cross-section drawing of a fixing device formed from two stacked members A and B, and bolt 50 and a nut 30, used to connect the members.

The bolt 50 is screwed in to fix upper and lower members A and B together. Bolt 50 passes through upper member A and is inserted into lower member B.

A nut 30 is embedded beforehand in upper and lower members A and B. Nut 30 includes a bolt insertion opening 31. Bolt insertion opening is formed from a large part-circular portion 32 and a small part-circular portion 33, with their open sides facing one another. The inner wall of large part-circular portion 32 is formed as a plain or smooth surface against which the outer perimeter of bolt 50 can slide. The inner wall of small part-circular portion 33 is formed as a threaded surface 36 that engages with the projecting threads of the outer perimeter of bolt 50.

Thus, bolt 50 slides against large part-circular portions 32 as it is loosely inserted into upper and lower members A and B. Then upon further insertion the tip of the bolt 50 engages a ramp section 35 which presses the bolt 50 laterally into engagement with the small part-circular portion 33, where bolt 50 is engaged and fixed.

In this embodiment of the present invention the ramp section 35 is disposed on the wall of large semicircular section 32 near the lower end of bolt insertion opening 31. After bolt 50 engages with small semicircular section 33 of nut 30 and is screwed in so that it approaches the bottom end, the ramp section abuts an end corner 51 of bolt 50, applying stress transversely of the bolt 50. This presses bolt 50 against threaded surface 36 of small semi-circular section 33. The head end of the bolt 50 has an annular shoulder 37 which engages in the opening in the part A to be fixed thus ensuring that the head end of the bolt 50 is held centrally.

In this manner, the engagement between bolt 50 and small semi-circular section 33 of nut 30 takes place with two support positions: ramp section 35 at one end and annular shoulder 37 at the other. This provides firm engagement.

If upper and lower members A and B are metallic, the bolt insertion opening can be moulded directly, instead of having a nut embedded in the members.

In the bolt fixing structure of the present invention, a bolt insertion opening of a nut used to tighten the bolt is formed as a Figure 8 in which a large semi-circle and a small semicircle are formed contiguously. The inner wall of the large semi-circular section is formed as a smooth surface against which the outer perimeter of the bolt can slide. The inner wall of the small semicircular section is formed as a threaded surface engagement with the projecting threads of the bolt. The bolt engages with the small semi-circular section of the bolt insertion opening of the nut. This restricts the bolt and maintains the engagement between the bolt and the nut.

An annular projection is disposed on the upper surface of the nut and a cavity, into which the annular projection can fit, is formed on the bottom surface. Nuts are used in pairs. Thus, only a single type of part is required. As a result, improved work efficiency provides significant reduction in implementation costs, and projection costs are reduced as well.

Alternatively, the bolt insertion opening of the nut can be formed as an open-ended slot so that the nut can be directly mounted from the side of the bolt. This provides a significant improvement in work efficiency.

As a further alternative a raised section can be disposed on the wall surface of the bolt insertion opening toward the bottom end. When the bolt is screwed in and approaches the bottom end, this raised section abuts the end of the bolt and presses the bolt laterally. As a result, the bolt is pressed against the threaded surface of the small semicircular section.

Thus, the engagement of the bolt and the small semicircular section of the nut takes place at two positions: a shoulder at the head end and the raised section. This allows the bolt to be fixed very reliably, completely preventing the bolt from loosening. This improves work efficiency and reduces costs.

## Claims

1. A fixing device (10) for threaded engagement on an elongate member (50) having an external screw thread, comprising a body with an opening (11) having an internal screw thread engageable by the said external screw thread of the elongate member when inserted therein, characterised in that the said internal screw thread (13) extends over a part of the opening (11) less than the entire circumference thereof, and the opening (11) is so shaped that a threaded elongate member (50) can be introduced into it without engaging the said internal screw thread (13), the body having means (14, 15) for resisting lateral displacement of a threaded elongate member (50) positioned within the said opening whereby to retain the internal screw threaded part (20) of the opening (11) in engagement with the external screw thread of the said elongate member (50).

2. A fixing device (10) according to Claim 1, characterised in that the said means for resisting lateral displacement of a threaded elongate member in the said opening (11) comprise a radially outwardly facing shoulder (145) on one face of the body and a radially inwardly facing shoulder (15s) on the opposite face of the body, the said shoulders of two like such fixing devices (10) being capable of cooperating, when the bodies are positioned adjacent one another with opposite faces in contact, to resist relative lateral movement of one body with respect to the other such that upon relative turning of the bodies about the axis of a threaded elongate member (50) the two partial internal threaded parts (13) of the individual fixing devices, each extending over less than the entire circumference of the opening (11), can together extend over more than half of the circumference whereby to resist lateral displacement of the fixing devices (10) with respect to the said threaded elongate member.

3. A fixing device in the form of a nut according to Claim 2 characterised in that the said opening (11) in the body is a closed figure and the said partial internal screw (13) thread extends over an arc of a circle.

4. A fixing device in the form of a nut according to Claim 2, characterised in that the said opening in the body is a laterally open slot (21) and the said partial internal screw thread extends over an arc of a circle.

5. A fixing device in the form of a nut according to Claim 2 or Claims 3 or 4 when dependent thereon, characterised in that the said radially outwardly facing shoulder (14s) is defined by a central raised boss (14) on one face of the body and the said radially inwardly facing shoulder (15s) is defined by a central cavity (15) in the opposite face of the said body.

6. A nut according to Claim 3, characterised in that the said hole (11) has a plain surface part (12) against which a threaded elongate member (50) can slide as the nut is positioned axially therealong.

7. A nut according to Claim 4, characterised in that the said laterally open slot (21) has plain side wall surfaces (23a, 23b) between the partial internal screw thread (22) and the open end (23) thereof, against which a threaded elongate member (50) can slide as the nut is positioned thereon.

8. A fixing device according to Claim 1, characterised in that the said means for resisting lateral displacement of a threaded elongate member in the said opening comprise a part (35) of the side wall of the opening (32) opposite the said partial internal threaded part (36) of the opening (32) engageable by the said elongate threaded member (50).

9. A fixing device according to Claim 8, characterised in that the said part (35) of the side wall of the opening has a plain surface for engagement by the said elongate threaded member (50).

10. A fixing device according to Claim 9, characterised in that the said part (35) of the side wall of the opening has a threaded surface for engagement by the said elongate threaded member (50).
